# EUROPÄISCHE PATENTSCHRIFT

(11) **EP 0 624 335 B1**
(45) Veröffentlichungstag und Bekanntmachung des Hinweises auf die Patenterteilung: **05.07.1995**
(21) Anmeldenummer: 93104855.7
(22) Anmeldetag: 24.03.1993
(51) Int. Cl.: A47J 43/25, A47J 19/02

(54) **Reibscheibe für eine Vielzweckküchenmaschine**
Grating disk for a multipurpose kitchen appliance
Disque à râper pour une machine à multiples fonctions

(43) Veröffentlichungstag der Anmeldung: 17.11.1994
(73) Patentinhaber: Braun Aktiengesellschaft, Frankfurt am Main (DE)
(72) Erfinder: Poock, Uwe, W-6233 Kelkheim/Ts. (DE)

(56) Entgegenhaltungen:
- EP-A- 0 174 407
- CH-A- 318 753
- CH-A- 364 089
- CH-A- 449 193
- DE-A- 2 061 415
- DE-A- 3 529 674
- DE-C- 3 718 728
- US-A- 2 844 176

## Beschreibung

Die Erfindung betrifft eine Reibscheibe mit einem im wesentlichen rohrförmigen und mit einer Siebeinrichtung versehenen Einsatz, der über eine Verriegelungseinrichtung lösbar mit der Reibscheibe verbindbar ist, wobei Reibscheibe und Einsatz zum Einsetzen in einem von einem Deckel verschließbaren Arbeitsbehälter einer Vielzweckküchenmaschine dienen und mit einer in den Arbeitsbehälter hineinragenden Antriebswelle drehfest kuppelbar sind und sich demzufolge bei rotierender Antriebswelle innerhalb des Arbeitsbehälters drehen, wobei die Reibscheibe an ihrer dem Deckel zugewandten Oberseite zum Zerreiben von Nahrungsmitteln geeignete Reibelemente aufweist und wobei am Deckel ein Einfüllschacht für Nahrungsmittel angeordnet ist, dessen behälterseitiges Ende bis zur Reibscheibe heruntergeführt ist.

Aus der Fig. 1 der DE-C-37 18 728 sind zwei Reibscheiben bekannt (Positionsnummer 160 und 84), die in einem Scheibenträger in einer etwa halbkreisförmigen Ausnehmung einsetzbar sind. Diese Reibscheiben weisen kleine Löcher auf, deren Ränder mit nach oben hervorstehenden scharfen Zacken versehen sind, die die eigentlichen Reibelemente bilden. Diese Reibscheiben dienen vorzugsweise zum Reiben von rohen Kartoffeln, wobei der dabei entstehende Brei durch die Löcher der Reibelemente in den Arbeitsbehälter gelangt.

Eine weitere Reibscheibe für eine Vielzweckküchenmaschine ist auch aus dem japanischen Gebrauchsmuster 57-19068 bekannt. Mit dieser Reibscheibe können vorzugsweise Zitrusfrüchte, Obst und Gemüse, wie Meerrettich oder Mohrrüben, sehr fein zerrieben werden. Weitere Anwendungsbereiche mit dieser Reibscheibe sind nicht vorgesehen.

Die in dem japanischen Gebrauchsmuster 57-19068 beschriebenen Reibelemente auf der Oberseite der Reibscheibe werden durch aus der Oberfläche herausgeschlagene scharfe Zacken gebildet, so daß beim Reibvorgang das geriebene Gut auf der Oberfläche der Reibscheibe nach außen transportiert wird und dann über den zwischen der Reibscheibe und dem Arbeitsbehälter gebildeten Ringspalt zum Boden des Arbeitsbehälters fällt. Mit dieser Reibscheibe können insbesondere sehr harte, feste und trockene Nahrungsmittel, wie Käse und Meerrettich besonders feinfaserig zerrieben werden.

Aus der CH-A-449 193 ist weiterhin eine Reibscheibe mit einem diese umgebenden Zentrifugenkorb bekannt, die einerseits zum Zentrifugieren von Fruchtfleisch, also zum Erzeugen von Saft, und andererseits bei der Verwendung der Reibscheibe ohne Zentrifugenkorb zum Zerkleinern von Nahrungsmitteln, also als Schnitzelgerät, dient. Eine drehfeste Verbindung von Reibscheibe und Zentrifugenkorb ist hierbei nicht vorgesehen.

Aus der CH-A-318 753 ist weiterhin eine Reibscheibe mit einem im wesentlichen rohrförmigen und mit einer Siebeinrichtung versehenen Einsatz der eingangs beschriebenen Art bekannt. Der Einsatz ist über eine Gewindeeinrichtung mit der Reibscheibe lösbar verbunden, um anstelle der Siebeinrichtung einen ohne Sieblöcher versehenen Einsatz zum Zwecke des Zerkleinerns von Nahrungsmitteln einzusetzen. Um ein ausreichend festes Gewinde sowohl am Einsatz wie an der Reibscheibe zu erhalten, weisen diese Teile im Gewindebereich ausreichend viele Gewindegänge für eine sichere und drehfeste Verbindung auf, was zwangsweise zu einer verhältnismäßig hohen Bauweise dieser Teile führt.

Auch wird durch diese Anordnung die Montage bzw. Demontage des Einsatzes erschwert, da beim Zusammenmontieren einerseits aufgrund der verhältnismäßig großen Teile viel Fingerspitzengefühl benötigt wird, damit die Gewinde überhaupt ineinandergreifen und da andererseits beim Demontieren viel Kraft aufgewendet werden muß, damit die Teile überhaupt voneinander getrennt werden können. Letzteres ergibt sich durch die höhere Drehmomentübertragung am Gewinde, so daß sich beide Gewindeteile im Betrieb fest gegeneinander verdrehen. Zum Lösen der Gewindeverbindung müssen besondere Werkzeugschlüssel verwendet werden, um das hohe Losbrechmoment überwinden zu können. Der Wechsel von einem Zentrifugiervorgang zu einem Zerkleinerungsvorgang ist somit verhältnismäßig aufwendig und daher weniger praktikabel.

Aufgabe der Erfindung ist es nun, ohne besondere Werkzeuge eine einfache, leicht herzustellende und schnell lösbare Verriegelungseinrichtung zwischen der Reibscheibe und dem Einsatz zu schaffen, so daß ein schneller Wechsel von der einen Behandlungsart, nämlich Zentrifugieren, zur anderen Behandlungsart, nämlich Reiben, möglich ist.

Diese Aufgabe wird erfindungsgemäß durch die Merkmale des kennzeichnenden Teils des Patentanspruchs 1 gelöst.

Hierdurch läßt sich die Reibscheibe nach der Saftherstellung besonders schnell aus dem rohrförmigen Einsatz entfernen, indem diese nämlich lediglich um ein geringes Maß gedreht wird, bis die Reibscheibe aus der Bajonettverriegelung befreit ist. Anschließend kann die Reibscheibe aus dem rohrförmigen Einsatz nach oben entfernt werden. Im anderen Fall, bei Einsatz der Reibscheibe für sich alleine in dem Arbeitsbehälter einer Vielzweckküchenmaschine, können wie eh und je besonders einfach Meerrettich, zerriebene Mohrrüben, geriebener Käse oder sonstig fein zerfaserte Nahrungsmittel hergestellt werden. Durch die zweifache Anwendung der Reibscheibe werden zusätzlich noch die Anschaffungskosten bei Vergrößerung des Anwendungsbereiches reduziert.

Aufgrund der Anordnung der zu einer Verriegelungseinrichtung gehörigen Mittel im Randbereich der Reibscheibe kann die gesamte Fläche der Reibscheibe auch bei Verwendung als Saftzentrifuge vollständig genutzt werden, da die Verriegelungseinrichtung des Einsatzes nur auf den äußeren Rand der Reibscheibe am Umfang gleichmäßig einwirkt. Letzteres ist erforderlich, damit eine sichere Verriegelung auch bei hohen Drehzahlen eingehalten wird, ohne daß dabei unerwünschte Unwuchten entstehen, die zueinem Lösen der Reibscheibe von dem Einsatz führen könnten.

Nach den Merkmalen des Anspruchs 2 rastet die Reibscheibe in ihrer Verriegelungsstellung im Einsatz ein, so daß im Betrieb ein selbständiges Lösen dieser Teile kaum möglich ist. Die Merkmale des Anspruchs 3 zentrieren auf einfache Weise den Einsatz an der Reibscheibe.

Durch die Weiterbildung der Erfindung nach den Merkmalen des Patentanspruchs 4 läßt sich an die Reibscheibe eine bereits in ihrer Formgebung schon komplizierte Mitnehmereinrichtung als Kunststoffspritzteil einfach anbringen, was zusätzlich noch die Kosten gering hält.

Gemäß den Merkmalen des Patentanspruchs 5 können auf die Reibscheibe verhältnismäßig hohe Kräfte ausgeübt werden, ohne daß die Antriebswelle deformiert wird oder gar bricht. Die gute Lagerstabilität kann gemäß den Merkmalen des Patentanspruchs 6 noch erheblich verbessert werden, so daß auch unvermeidbare Unwuchten besser abgefangen werden können.

Wird der Schaft aus Kunststoff geformt, so kann er auch, wenn er nicht an die Reibscheibe direkt angespritzt wird, mittels einer weiteren lösbaren Verriegelungseinrichtung mit dieser verbunden werden (Anspruch 8).

Durch die Weiterbildung der Erfindung gemäß Anspruch 8 ergibt sich ein Siebkorb, der den Trester gut zurückhält und gleichzeitig den Saft schnell abfließen läßt. Weiterhin können derartige, entlang des rohrförmigen Einsatzes verlaufende Lamellen nach Entfernen des Siebkorbes leicht gereinigt werden.

Gemäß den Merkmalen des Patentanspruchs 9 kann auf einen besonderen Siebkorb sogar verzichtet werden, allerdings muß dann der rohrförmige Einsatz anstelle von Kunststoff aus Metall hergestellt sein.

Durch die Merkmale des Patentanspruchs 10 ergibt sich eine besonders verschleißfeste Reibscheibe, die auch großen Biegebeanspruchungen stets standhält. Als ausreichend für die Dicke der Reibscheibe hat sich ein Maß von etwa 1 bis 1,5 mm ergeben, bei der ausreichend stabile Reibelemente aus der Oberfläche der Reibscheibe herausgeformt werden können.

Ein Ausführungsbeispiel der Erfindung ist in der Zeichnung dargestellt und wird im folgenden näher erläutert. Es zeigen:
- Fig. 1: Längsschnitt durch einen Arbeitsbehälter mit dem rohrförmigen Einsatz und mit der mittels eines Bajonettverschlusses verschraubten Reibscheibe nach der Erfindung,
- Fig. 2: Längsschnitt durch einen Arbeitsbehälter, in dessen Zentrum nur die in Fig. 1 dargestellte Reibscheibe gelagert ist, die zum einen zum Herstellen von Meerrettich, geriebenem Käse oder ähnlichen zu zerfasernden Nahrungsmitteln und zum anderen zum Herstellen von Schnee aus Eiswürfeln dient,
- Fig. 3: Längsschnitt durch den in Fig.1 dargestellten, inneren rohrförmigen Einsatz,
- Fig. 4: Draufsicht von oben auf den rohrförmigen Einsatz nach Fig. 3 und
- Fig. 5: Teildraufsicht auf die in Fig 2 dargestellte Reibscheibe.

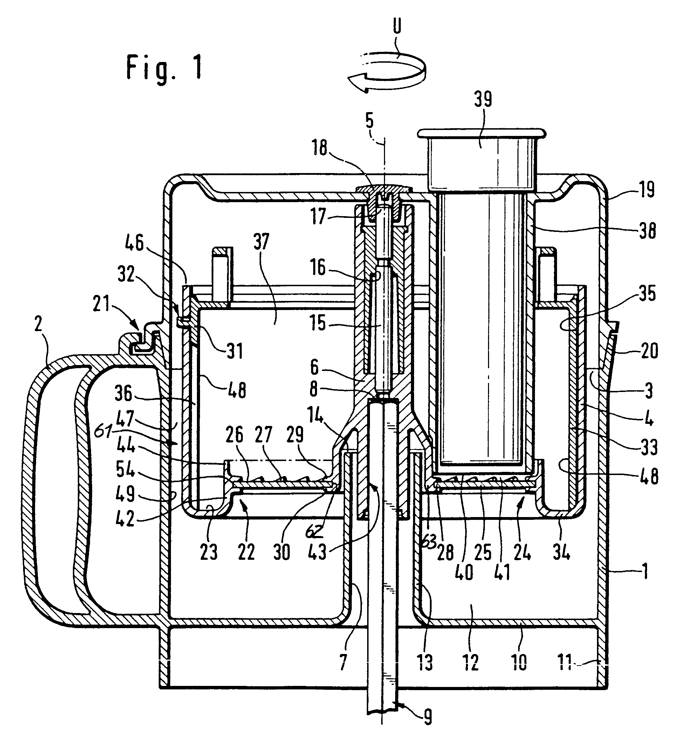

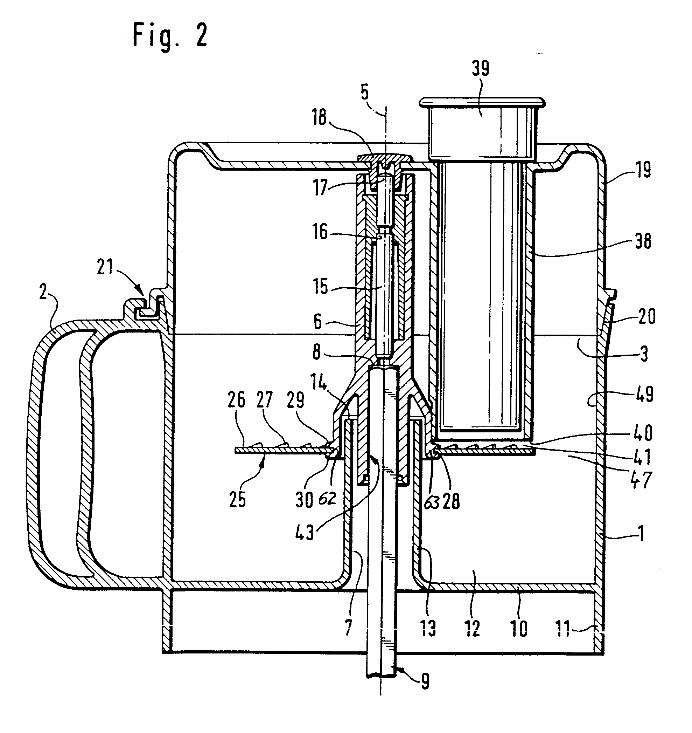

Zur Vermeidung von Wiederholungen wurden in den Figuren 1 bis 5 für gleiche Bauteile gleiche Bezugszeichen gewählt, so daß in den Figuren 2 bis 5 nur auf die gemäß Fig. 1 unterschiedlichen Details eingegangen wird.

In Fig. 1 ist ein Arbeitsbehälter 1 mit einem Handgriff 2 dargestellt, in dessen Öffnung 3 von oben her ein rohrförmiger Einsatz 4 derart eingesetzt ist, daß dieser über seine im Zentrum 5 des rohrförmigen Einsatzes 4 ausgebildete, den Schaft einer Reibscheibe 25 darstellende Nabe 6 auf dem stirnseitigen Ende 8 der von einer im Querschnitt sechskantförmigen Antriebswelle 9 aufsitzt. Dabei greift das untere Ende des rohrförmigen Einsatzes 4 in den von dem äußeren Umfang 54 der Reibscheibe 25 und der Innenwandung 49 des Arbeitsbehälters 1 gebildeten Ringräume 47 ein. Die Antriebswelle 9 ragt in einen unterhalb des Arbeitsbehälters 1 ausgebildeten Sockel einer Vielzweckküchenmaschine (nicht dargestellt) hinein, in der über eine ebenfalls in der Zeichnung nicht dargestellte Getriebeanordnung die Antriebswelle 9 mit einem Elektromotor (nicht dargestellt) in Antriebsverbindung steht.

Um den Arbeitsbehälter 1 auf einem in Fig. 1 nicht dargestellten Gerätesockel zentrieren zu können, ist umfangsseitig unterhalb des Bodens 10 des Arbeitsbehälters 1 ein Ring 11 ausgebildet. Der Arbeitsbehälter 1 weist in seinem zentralen Bereich einen vom Boden 10 in das Behälterinnere 12 hineinragenden Rohrabschnitt 13 auf, dessen Bohrung 7 von der Antriebswelle 9 durchdrungen wird, wobei letztere noch über das freie Ende 14 des Rohrabschnittes 13 nach Fig. 1 und 2 nach oben hinausragt.

Nach den Figuren 1 und 2 weist die Nabe 6 eine zentrale Bohrung 16 auf, in der ein aus Metall hergestellter Zylinderstift 15 eingepreßt, eingeklebt oder mit ähnlichen Befestigungsmitteln befestigt ist. Anstelle des Zylinderstiftes 15 kann auch eine in der Zeichnung nicht dargestellte Zentrierhülse eingesetzt werden. Der Zylinderstift 15 ist an seinem in den Figuren 1 und 2 oberen freien Ende 17 in einer Zentrierhülse 18 drehbar gelagert, die Bestandteil eines Deckels 19 ist, der die Öffnung 3 des Arbeitsbehälters 1 an der Stelle 20 dichtend verschließt. Der Deckel 19 ist über eine erste Bajonettverriegelung 21 mit dem Arbeitsbehälter 1 fest und dennoch schnell lösbar verbunden.

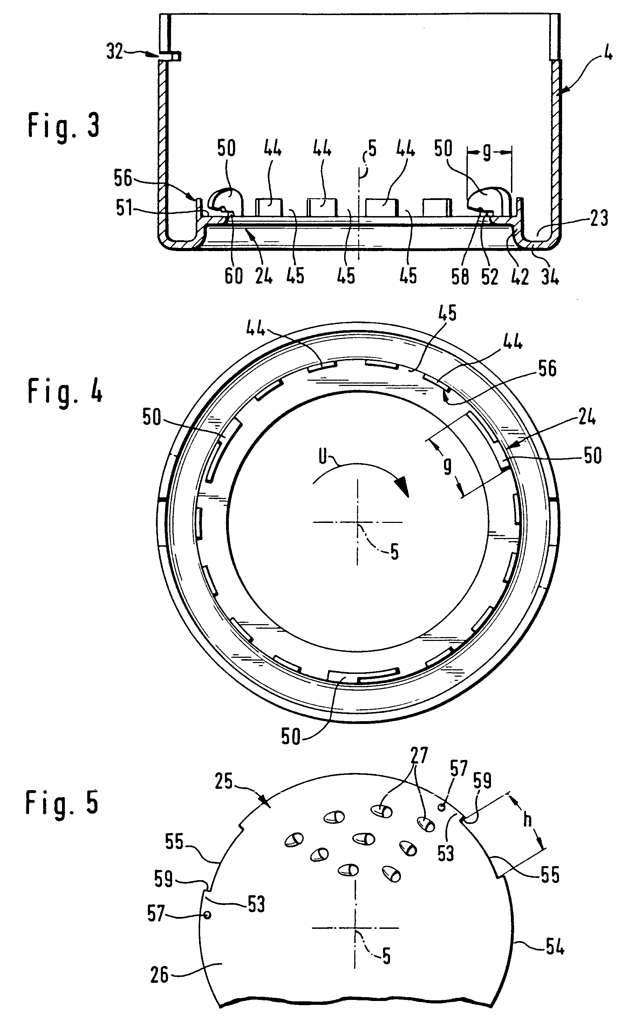

In Fig. 1 weist der rohrförmige Einsatz 4 in seinem Bodenbereich 22 eine am Außenumfang umlaufende Rinne 23 auf, an deren inneren Rand 24 mittels einer in den Figuren 3 und 4 näher dargestellten zweiten Bajonettverriegelung 24 eine ringförmige Reibscheibe 25 befestigt ist, die an ihrer Oberseite 26 mit hervorstehenden, aus der Oberseite 26 im spanlosen Arbeitsverfahren herausgeschlagenen Reibelementen 27 in Form von scharfen Zacken aufweist. Am radial inneren Rand 28 weist die Reibscheibe 25 eine Bohrung 62 auf, die zusammen mit dem Rand 28 fest mit der Nabe 6 verbunden ist, indem die Nabe 6 an den Rand 28 von oben und unten her mittels der ringförmigen Vorsprünge 29, 30 angespritzt ist, wobei der die Vorsprünge 29, 30 verbindende Ringabschnitt 63 in die Bohrung 62 eingreift. Um eine noch innigere Verbindung zwischen der Nabe 6 und der Reibscheibe 25 herzustellen, können am radial inneren Rand 28 noch zusätzlich Bohrungen (nicht dargestellt) die Reibscheibe 25 durchdringen, in die dann ebenfalls das Kunststoffmaterial der Nabe 6 beim Spritzvorgang einfließt.

Nach Fig. 1 ist in den rohrförmigen Einsatz 4 ein aus Kunststoff hergestellter Siebkorb 31 eingesetzt, der über eine dritte Bajonettverriegelung 32 ortsfest mit dem rohrförmigen Einsatz 4 verbindbar ist. Der Siebkorb 31 weist bis zum Boden 34 der Rinne 23 hineinragende Lamellen 33 auf, die nur mit einem sehr geringen Spalt (in der Zeichnung nicht dargestellt) von der Innenwandung 35 des rohrförmigen Einsatzes 4 entfernt sind. Die Lamellen 33 verlaufen im wesentlichen parallel zur Innenwandung 35, die wiederum im wesentlichen parallel zum Zentrum 5 verläuft. Die jeweils benachbarten Lamellen 33 weisen einen geringen Abstand voneinander auf, so daß sich jeweils sehr kleine Längsspalte 36 ergeben, durch die der zentrifugierte Saft vom Innenraum 37 nach außen an die Innenwandung 35 des Behälters 4 treten kann, während der Trester von den Lamellen 33 zurückgehalten wird.

Nach den Figuren 1 und 2 ist der Deckel 19 mit einem in den Innenraum 37 des Behälters 4 hineinragenden Einfüllschacht 38 versehen, in dem sich ein Stopfer 39 befindet. Der Einfüllschacht 38 reicht mit seinem freien Ende 40 bis kurz oberhalb der Enden der Reibelemente 27, so daß sich zwischen dem Ende 40 des Einfüllschachtes 38 und der Enden der Reibelemente 27 auf der Reibscheibe 25 ein geringer Ringspalt 41 ergibt, der möglichst klein bemessen ist, damit beim Anpressen von Früchten mittels des Stopfers 39 gegen die Oberseite 26 der Reibscheibe 25 nicht die Reibenden der Früchte den Ringspalt 41 passieren, ohne vorher völlig zerrieben zu sein.

In Fig. 1 stützt sich die Nabe 6 zwischen der Antriebswelle 9 und der Zentrierhülse 18 ab, die fester Bestandteil des Deckels 19 und somit des Arbeitsbehälters 1 ist, der, ebenfalls wie die Antriebswelle 9, im Sockel (nicht dargestellt) der Vielzweckküchenmaschine zentriert ist. Die Nabe 6 trägt die Reibscheibe 25, die wiederum an ihrem radial äußeren Rand über die zweite Bajonettverriegelung 24 den rohrförmigen Einsatz 4 trägt, der somit mit der Reibscheibe 25 einen nach oben offenen Behälter 61 bildet.

In den Figuren 3 bis 5 ist nochmals ein Ausführungsbeispiel der in Fig. 1 nur annäherungsweise dargestellten, zweiten Bajonettverriegelung 24 näher dargestellt. Die zweite Bajonettverriegelung 24 besteht aus an dem radial inneren Ring 42 gemäß Fig. 3 nach oben hervorstehenden und am Behälter 4 angeformten Verriegelungslappen 50, die gleichmäßig am Umfang des radial inneren Ringes 42 angeordnet sind und die mit der Stirnfläche 51 einen Schlitz 52 bilden, der zur Aufnahme des umfangseitigen Bereiches 53 der Reibscheibe 25 dient (Fig.5).

Am äußeren Umfang 54 der Reibscheibe 25 ist nach den Figuren 3 bis 5 entsprechend der Anzahl der Verriegelungslappen 50 eine entsprechend gleiche Anzahl von Einschnitten 55 ausgebildet, deren umfangsseitige Länge h geringfügig größer ist als die umfangsseitige Länge g der Verriegelungslappen 50. Dies dient dazu, daß beim Aufsetzen der Reibscheibe 25 in den von den Abstreifern 44 umgebene, die Reibscheibe 25 an ihrem äußeren Umfang 54 zentrierenden Ring 56 die Einschnitte 55 die Verriegelungslappen 50 umgeben, bis durch Verdrehen der Reibscheibe 25 im Uhrzeigersinn U die Bereiche 53 in die Schlitze 52 eingreifen und von den Verriegelungslappen 50 gegen Abheben gesichert sind. In dieser Verriegelungsstellung greifen an der Oberseite 26 der Reibscheibe 25 hervorstehende Noppen 57 in an den Verriegelungslappen 50 ausgebildete Kerben 58 ein.

Da auch der rohrförmige Einsatz 4 von der Reibscheibe 25 im Uhrzeigersinn U angetrieben wird, schlagen somit nach den Figuren 3 und 5 die in Drehrichtung hinteren Stirnkanten 59 an den an den Enden der Schlitze 52 ausgebildeten Anschlägen 60 an, so daß eine drehfeste Mitnahme zwischen der Reibscheibe 25 und dem rohrförmigen Einsatz 4 gebildet wird.

Die mit dem rohrförmigen Einsatz 4 verbundene Reibscheibe 25 arbeitet nach Fig. 1 wie folgt:
Wird die Antriebswelle 9 von dem in der Zeichnung nicht dargestellten Antriebsmotor der Vielzweckküchenmaschine in Drehung versetzt, so treibt diese über ihre als Sechskant ausgebildete Mitnahmeeinrichtung 43 die Nabe 6 an, die wiederum die mit ihr fest verbundene Reibscheibe 25 und den über die zweite Bajonettverriegelung 24 mit der Reibscheibe 25 verbundenen rohrförmigen Einsatz 4 in Drehung versetzt.

Werden nun nach Fig. 1 Früchte über den Einfüllschacht 38 eingegeben, so gelangen diese auf die Oberseite 26 der Reibscheibe 25 und werden dort von den Reibelementen 27 zu einem Obstbrei verrieben. Aufgrund der mit hoher Drehzahl rotierenden Reibscheibe 25 und des rohrförmigen Einsatzes 4 wird der Obstbrei sowohl über die an dem radial inneren Ring 42 nach oben gerichteten Abstreifer 44 als auch durch die von den Abstreifern 44 gebildeten Durchlässe 45 (Figuren 3 und 4) nach außen befördert, bis sie an den Lamellen 33 anschlagen und in radialer Richtung abgebremst werden.

Nun wird der Saft aus dem Obstbrei zentrifugiert, der durch die Längsspalte 36 nach außen tritt und der an der Innenwand 35 anschlägt, von wo er aufgrund des nachfließ enden Saftes nach Fig.1 bis zum oberen Rand 46 gedrückt wird und dann in den vom Behälter 61 und dem Arbeitsbehälter 1 gebildeten Ringraum 47 gelangt und zum Boden 10 des Arbeitsbehälters 1 fällt, während der Trester an der Innenwandung 48 der Lamellen 33 zurückbleibt. Je mehr Obstbrei zentrifugiert wird, desto dicker wächst die an der Innenwandung 48 sich bildende Schicht (nicht dargestellt) zum Zentrum 5 hin und umso mehr Saft läuft in den Arbeitsbehälter 1. Verläuft die Innenwandug 35 des rohrförmigen Einsatzes 4 konisch erweiternd nach oben, so fließt der Saft noch beser aus dem Behälter 61 ab.

Die Anordnung nach Fig. 2 unterscheidet sich von der in Fig. 1 lediglich darin, daß, nachdem der rohrförmige Einsatz 4 mit seiner Reibscheibe 25 und seiner Nabe 6 nach Abheben des Deckels 19 aus dem Arbeitbehälter 1 herausgehoben, gesäubert und der Saft aus dem Arbeitsbehälter 1 entfernt wurde, nun für einen weiteren, völlig anderen Arbeitsgang, wie das Saftauspressen, beispielsweise zum Herstellen von geriebenem Käse oder gar zum Herstellen von Schnee aus Eiswürfeln verwendet wird.

Zum Entfernen des rohrförmigen Einsatzes 4 wird durch Drehen der mit der Reibscheibe 25 verbundenen Nabe 6 die Reibscheibe 25 von diesem über die zweite Bajonettverriegelung 24 getrennt. Anschließend wird nur noch die Nabe 6 mit der Reibscheibe 25 in den Arbeitsbehälter 1 eingesetzt und über die Mitnehmereinrichtung 43 mit der Arbeitswelle 9 gekuppelt.

Die Arbeitsweise der Reibscheibe 25 ohne den rohrförmigen Einsatz 4 verläuft wie folgt:
Sobald der Deckel 19 den Arbeitsbehälter 1 verschließt, können über den Einfüllschacht 38, beispielsweise Käsestücke, Meerrettich, Eiswürfel etc. eingegeben und mittels des Stopfers 39 so fest gegen die Reibscheibe 25 gedrückt werden, daß auch besonders harte Gegenstände bei hoher Drehzahl der Reibscheibe 25 von den Reibelementen 27 sehr feinfaserig gerieben werden, die aufgrund der Zentrifugalwirkung von der Reibscheibe 25 radial nach außen gegen die Innenwandung 49 des Arbeitsbehälters 1 geschleudert werden, von wo sie zum Boden 10 des Arbeitsbehälters 1 fallen. Auf diese Weise ist mit der an der Nabe 6 befestigten Reibscheibe (siehe Fig. 2) ein Reiben von Nahrungsmitteln zum Herstellen von beispielsweise Babynahrung (Brei), geriebenem Käse, Schokolade, Gewürzen oder gar Schnee etc., möglich.

## Patentansprüche

1. Reibscheibe (25) mit einem im wesentlichen rohrförmigen und mit einer Siebeinrichtung (31) versehenen Einsatz (4), der über eine Verriegelungseinrichtung (24) lösbar mit der Reibscheibe (25) verbindbar ist, wobei Reibscheibe (25) und Einsatz (4) zum Einsetzen in einem von einem Deckel (19) verschließbaren Arbeitsbehälter (1) einer Vielzweckküchenmaschine dienen und mit einer in den Arbeitsbehälter (1) hineinragenden Antriebswelle (9) drehfest kuppelbar sind und sich demzufolge bei rotierender Antriebswelle (9) innerhalb des Arbeitsbehälters (1) drehen, wobei die Reibscheibe (25) an ihrer dem Deckel (19) zugewandten Oberseite (26) zum Zerreiben von Nahrungsmitteln geeignete Reibelemente (27) aufweist und wobei am Deckel (19) ein Einfüllschacht (38) für Nahrungsmittel angeordnet ist, dessen behälterseitiges Ende bis zur Reibscheibe (25) heruntergeführt ist,
**dadurch gekennzeichnet**,
daß die Verriegelungseinrichtung (24) aus einem zwischen dem Einsatz (4) und der Reibscheibe (25) ausgebildeten Bajonettverschluß (50, 55) besteht, welcher einerseits aus an einem Ring (42) des Einsatzes (4) gleichmäßig verteilten Verriegelungslappen (50) gebildet wird, die mit Schlitzen (52) versehen sind und andererseits aus an der Reibscheibe (25) am äußeren Rand hervorstehenden Vorsprüngen (53) besteht, welche ihrerseits in Verriegelungsstellung in die Schlitze (52) der Verriegelungslappen (50) eingreifen und daß die in Drehrichtung (U) hinteren Stirnkanten (59) der Reibscheibe (25) dabei an Anschlägen (60) der Schlitze (52) anschlagen.

2. Reibscheibe mit Einsatz nach Anspruch 1,
**dadurch gekennzeichnet**,
daß in der Verriegelungsstellung von Reibscheibe (25) und Einsatz (4) ein an der Oberseite (26) der Reibscheibe (25) hervorstehender Noppen (57) in eine an den Verriegelungslappen (50) ausgebildete Kerbe (58) eingreift.

3. Reibscheibe mit Einsatz nach Anspruch 1,
**dadurch gekennzeichnet**,
daß der äußere Umfang (54) der Reibscheibe (25) sich an einem am Einsatz (4) ausgebildeten Ring (56) zentriert.

4. Reibscheibe mit Einsatz nach Anspruch 1,
**dadurch gekennzeichnet**,
daß die Reibscheibe (25) mit einer als Schaft (6) ausgebildeten Mitnehmereinrichtung (43) versehen ist und daß der Schaft (6) aus an die Reibscheibe (25) in ihrem Zentrum angespritztem Kunststoff besteht.

5. Reibscheibe mit Einsatz nach Anspruch 4,
**dadurch gekennzeichnet**,
daß der Schaft (6) an seinem der Reibscheibe (25) abgewandten Ende am Deckel (19) drehbar gelagert ist.

6. Reibscheibe mit Einsatz nach Anspruch 5,
**dadurch gekennzeichnet**,
daß im Schaft (6) ein aus Metall hergestellter Zylinderstift (15) befestigt ist, der in eine am Deckel (19) ausgebildete Zentrierhülse (18) eingreift.

7. Reibscheibe mit Einsatz nach Anspruch 4,
**dadurch gekennzeichnet**,
daß der Schaft (6) mit der Reibscheibe (25) über eine weitere lösbare Verriegelungseinrichtung, vorzugsweise eine Bajonettverriegelung, verbindbar ist, die in eine im Zentrum der Reibscheibe (25) ausgebildete Bohrung (28) eingreift.

8. Reibscheibe mit Einsatz nach Anspruch 1,
**dadurch gekennzeichnet**,
daß die Siebeinrichtung (31) aus einem in den rohrförmigen Einsatz (4) eingesetzten Siebkorb besteht, der bis zum unteren Ende des Einsatzes (4) verlaufende, in sehr geringem Abstand zueinander angeordnete Lamellen (33) aufweist und daß die Lamellen (33) mit sehr geringem Abstand von der Innenwandung (35) des Einsatzes (4) entfernt verlaufen.

9. Reibscheibe mit Einsatz nach Anspruch 1,
**dadurch gekennzeichnet**,
daß die Siebeinrichtung aus im Einsatz (4) ausgebildeten Sieblöchern mit sehr geringem Querschnitt besteht und daß der Einsatz aus nichtrostendem Metall hergestellt ist.

10. Reibscheibe mit Einsatz nach einem der vorhergehenden Ansprüche,
**dadurch gekennzeichnet**,
daß die Reibscheibe (25) aus Metall, vorzugsweise aus Edelstahl, hergestellt ist, daß die Reibelemente (27) gleichmäßig auf der Oberseite (26) der massiv ausgebildeten Reibscheibe (25) angeordnet sind und daß die Reibelemente (27) durch aus der Oberseite (26) der Reibscheibe (25) herausgeschlagene Späne gebildet werden.

## Claims

1. A grating disk (25) with an essentially tubular inset (4) provided with a straining device (31) and being detachably connectible with the grating disk (25) by means of a locking device (24), with the grating disk (25) and the inset (4) serving for insertion in a processing container (1), closable by a cover (19), of a multi-purpose food processor and being adapted to be coupled in a non-rotating relationship to a drive shaft (9) extending into the processing container (1), consequently rotating in the interior of the processing container (1) when the drive shaft (9) rotates, with the grating disk (25) having on its upper face (26) close to the cover (19) grater elements (27) suitable for comminuting food materials, and with the cover (19) providing a feed tube (38) for inserting food materials, the end of the feed tube on the side close to the container extending down to the grating disk (25),
**characterized in that** the locking device (24) is comprised of a bayonet-type lock (50, 55) formed between the inset (4) and the grating disk (25), the lock providing on the one side locking tabs (50) uniformly distributed on a ring (42) of the inset (4) and provided with slots (52), and comprising on the other side projections (53) projecting from the outer periphery of the grating disk (25), the projections engaging in turn within the slots (52) of the locking tabs (50) when in the locked position, with the trailing edges (59) of the grating disk (25), when viewed in the direction of rotation (U), then abutting stops (60) of the slots (52).

2. The grating disk with inset as claimed in claim 1,
**characterized in that** with the grating disk (25) and the inset (4) in the locked position, a knob (57) projecting from the upper face (26) of the grating disk (25) is in engagement with a corresponding notch (58) formed on the locking tabs (50).

3. The grating disk with inset as claimed in claim 1,
**characterized in that** the perimeter (54) of the grating disk (25) is centrally located on a ring (56) provided on the inset (4).

4. The grating disk with inset as claimed in claim 1,
**characterized in that** the grating disk (25) is provided with an engaging device (43) configured as a stem (6), and that the stem (6) is fabricated from a plastic material injection-molded onto the center of the grating disk (25).

5. The grating disk with inset as claimed in claim 4,
**characterized in that** the stem (6) has its end remote from the grating disk (25) rotatably journaled on the cover (19).

6. The grating disk with inset as claimed in claim 5,
**characterized in that** a cylindrical pin (15) fabricated from metal is secured within the stem (6), the pin engaging a centering sleeve (18) provided on the cover (19).

7. The grating disk with inset as claimed in claim 4,
**characterized in that** the stem (6) is connectible with the grating disk (25) by means of a further releasable locking device, preferably a bayonet-type locking means which engages within a bore (28) provided in the center of the grating disk (25).

8. The grating disk with inset as claimed in claim 1,
**characterized in that** the straining device (31) is comprised of a strainer basket inserted into the tubular inset (4) and provided with lamellae (33) relatively spaced by a very small distance and projecting down to the lower end of the inset (4), the lamellae (33) being spaced from the inner wall (35) of the inset (4) by a very small distance.

9. The grating disk with inset as claimed in claim 1,
**characterized in that** the straining device is comprised of straining holes of a very small cross-section formed in the inset (4), and that the inset is manufactured from stainless metal.

10. The grating disk with inset as claimed in any one of the preceding claims,
**characterized in that** the grating disk (25) is manufactured from metal, preferably high-grade steel, and that the grater elements (27) are arranged on the upper face (26) of the solid grating disk (25) in a uniform pattern, and that the grater elements (27) are formed by raised chips punched out of the upper face (26) of the grating disk (25).

## Revendications

1. Disque à râper (25) comportant un insert sensiblement tubulaire (4) et pourvu d'un dispositif de tamisage (31), ledit insert pouvant être relié de façon détachable au disque à râper (25) via un dispositif (24) de verrouillage, où le disque à râper (25) et l'insert (4) servent à être mis en place dans un récipient de travail (1), refermable par un couvercle (19), d'un appareil ménager à multiples fonctions et peuvent être accouplés solidairement en rotation à un arbre d'entraînement (9) pénétrant dans le récipient de travail (1), et ils tournent par conséquent à l'intérieur du récipient de travail (1) lorsque l'arbre d'entraînement (9) est en rotation, le disque à râper (25) présentant sur sa face supérieure (26) orientée vers le couvercle (19) des éléments de râpage (27) appropriés pour broyer des denrées alimentaires, et sur le couvercle (19) est agencé un puits d'introduction (38) pour des denrées alimentaires, dont l'extrémité côté récipient descend jusqu'au disque à râper (25),
caractérisé en ce que le dispositif de verrouillage (24) est constitué par un emboîtement à baïonnette (50, 55) réalisé entre l'insert (4) et le disque à râper (25), qui est formé d'une part par des pattes de verrouillage (50) réparties régulièrement sur une bague (42) de l'insert (4), lesdites pattes étant pourvues de fentes (52), et d'autre part par des saillies (53) dépassant du disque à râper (25) sur la bordure extérieure, ces saillies s engageant à leur tour en position de verrouillage dans les fentes (52) des pattes de verrouillage (50), et en ce que les arêtes frontales (59) arrières en direction de rotation (U) du disque à râper (25) butent contre des butées (60) des fentes (52).

2. Disque à râper avec insert selon la revendication 1,
caractérisé en ce que dans la position de verrouillage du disque à râper (25) et de l'insert (4), un bouton (57) dépassant de la face supérieure (26) du disque à râper (25) s'engage dans une entaille (58) réalisée sur les pattes de verrouillage (50).

3. Disque à râper avec insert selon la revendication 1,
caractérisé en ce que la périphérie extérieure (54) du disque à râper (25) se centre sur une bague (56) réalisée sur l'insert (4).

4. Disque à râper avec insert selon la revendication 1,
caractérisé en ce que le disque à râper (25) est pourvu d'un dispositif d'entraînement (43) réalisé sous la forme d'un tronc (6), et en ce que le tronc (6) est constitué en une matière plastique injectée sur le disque à râper (25) dans son centre.

5. Disque à râper avec insert selon la revendication 4,
caractérisé en ce que le tronc (6) est monté en rotation sur le couvercle (19) par son extrémité détournée du disque à râper (25).

6. Disque à râper avec insert selon la revendication 5,
caractérisé en ce que dans le tronc (6) est fixée une tige cylindrique (15) fabriquée en métal, qui s'engage dans une douille de centrage (18) réalisée sur le couvercle (19).

7. Disque à râper avec insert selon la revendication 4,
caractérisé en ce que le tronc (6) peut être relié au disque à râper (25) via un autre dispositif de verrouillage libérable, de préférence un verrouillage à baïonnette, qui s'engage dans un perçage (28) réalisé dans le centre du disque à râper (25).

8. Disque à râper avec insert selon la revendication 1,
caractérisé en ce que le dispositif de tamisage (31) est constitué par un panier de tamisage mis en place dans l'insert tubulaire (4), qui présente des lamelles (33) s'étendant jusqu'à l'extrémité inférieure de l'insert (4) et agencées à une distance très faible les unes des autres, et en ce que les lamelles (33) s'étendent à une distance très faible de la paroi intérieure (35) de l'insert (4).

9. Disque à râper avec insert selon la revendication 1,
caractérisé en ce que le dispositif de tamisage est constitué par des trous de tamisage réalisés dans l'insert (4) et ayant une très faible section transversale, et en ce que l'insert est constitué en un métal inoxydable.

10. Disque à râper avec insert selon l'une quelconque des revendications précédentes,
caractérisé en ce que le disque à râper (25) est fabriqué en métal, de préférence en acier inoxydable, en ce que les éléments de râpage (27) sont agencés régulièrement sur la face supérieure (26) du disque à râper (25) réalisé de façon massive, et en ce que les éléments de râpage (27) sont formés par des languettes découpées dans la face supérieure (26) du disque à râper (25).
